# EUROPÄISCHE PATENTANMELDUNG

(11) **EP 1 103 499 A1**
(43) Veröffentlichungstag der Anmeldung: **30.05.2001**
(21) Anmeldenummer: 00124887.1
(22) Anmeldetag: 15.11.2000
(51) Int. Cl.: B65G 47/96, B65G 47/38, B07C 5/22

(54) **Kippvorrichtung zum Entladen von Transportbehältern**

(30) Priorität: 23.11.1999 DE 29920564 U
(71) Anmelder: mechatronik Gesellschaft zur Entwicklung, und Anwendung von Mechanik und Mikroelektronic mbH, 41061 Mönchengladbach (DE)
(72) Erfinder: Schwalm, Hans, 41239 Mönchengladbach (DE)
(74) Vertreter: Bonsmann, Manfred, Dipl.-Ing.

(57) **Zusammenfassung**

Die Erfindung betrifft eine Kippvorrichtung (100) zum Schwenken von Transportbehältern (1, 1') - z.B. bei Gepäckfördersystemen in Flughäfen - um eine zur Förderrichtung (F) der Transportbehälter im wesentlichen parallele Kippachse, die ein oder mehrere auf einem Rahmen (5, 7, 8) angeordnete Förderelemente (4, 6) aufweist, welche die Bewegung der Transportbehälter in Förderrichtung bewirken können, wobei der Rahmen mit den Förderelementen um die Kippachse schwenkbar angeordnet ist. Das Kippen der Transportbehälter (1, 1') kann dynamisch erfolgen, das heißt ohne Unterbrechung der Bewegung in Förderrichtung. Der Rahmen ist bevorzugt als Viergelenkrahmen ausgebildet. Es können auch mehrere Kippvorrichtungen hintereinander zu einer Kippstation zusammengefaßt werden, die zur Realisierung des Schwenkvorganges vorzugsweise eine im Wesentlichen sinusförmige Bewegung ausführen.

## Beschreibung

Die Erfindung betrifft eine Kippvorrichtung zum Schwenken von Transportbehältern um eine zur Förderrichtung der Transportbehälter im wesentlichen parallele Kippachse sowie eine aus derartigen Kippvorrichtungen gebildete Kippstation.

Kippvorrichtungen der eingangs genannten Art werden benötigt, um Transportbehälter eines Fördersystems entleeren zu können. Ein typisches Beispiel für ein derartiges Fördersystem ist die Gepäckstückbeförderung in einem Flughafen. Hierbei werden auf langen Transportbändern, welche die Be- und Entladestationen von Flugzeugen mit Gepäckaufgaben beziehungsweise mit Gepäckausgaben für die Passagiere verbinden, Gepäckstücke wie z.B. Koffer befördert. Dabei können die Gepäckstücke sowohl unmittelbar auf dem Transportband aufliegen als auch von Transportbehältern aufgenommen werden, welche ihrerseits vom Band befördert werden. Ein Transportbehälter kann demnach im Rahmen der nachfolgenden Ausführungen sowohl ein Teil der Fördervorrichtung sein als auch ein Teil des zu befördernden Stückgutes (z.B. ein Koffer).

Wenn ein derartiger Transportbehälter sein Ziel erreicht hat, muss er vom Band heruntergenommen werden. Ist der Transportbehälter fehlgeleitet oder ist ein Entladen aus anderen Gründen nicht erwünscht, so muß auch ein Durchfahren der Entladestation ohne Entladevorgang möglich sein. Zu diesem Zweck sind verschiedene Vorrichtungen bekannt, wobei zur Gewährleistung hoher Transportkapazitäten eine schnelle und gleichzeitig sichere Funktion dieser Vorrichtungen anzustreben ist. Diesbezüglich wird in der WO 98/25842 eine Kippvorrichtung zum Entleeren von Behältern für Stückgut offenbart, die auf einem Trägerband endlos umlaufende Kipparme enthält, welche die Transportbehälter vom Förderband übernehmen und während ihres Weges auf dem oberen Trum des Trägerbandes um eine in etwa parallel zur Förderrichtung gelegene Achse - also seitlich - kippen. Hierdurch rutscht der Inhalt des Transportbehälters beziehungsweise der Transportbehälter selbst zur Seite hin ab und wird so der Förderkette entnommen. Nachteilig bei einem derartigen System ist, dass es verhältnismäßig aufwendig ist, da die Kipparme auf einem endlos umlaufenden Träger angeordnet werden müssen. Dieser bewegliche Träger muss entsprechend stabil ausgelegt werden, damit die bei den angestrebten hohen Fördergeschwindigkeiten auftretenden Kräfte verarbeitet werden können. Weiterhin ist nachteilig, dass eine derartige Kippvorrichtung eine erhebliche Länge aufweist, da der gesamte Kippvorgang und (bei mit dem Fördersystem verbundenen Transportbehältern) das Zurückfahren der Transportbehälter in die Ausgangsstellung innerhalb der Wegstrecke der Kippvorrichtung auszuführen sind.

Aufgabe der vorliegenden Erfindung war es, eine Kippvorrichtung der eingangs genannten Art zur Verfügung zu stellen, welche konstruktiv einfacher und in ihrer Einsetzbarkeit flexibler ist und welche gleichzeitig eine hohe Kippleistung ermöglicht.

Diese Aufgabe wird gemäß Anspruch 1 durch eine Kippvorrichtung zum Schwenken von Transportbehältern um eine zur Förderrichtung der Transportbehälter in etwa parallele Kippachse gelöst, welche dadurch gekennzeichnet ist, dass sie ein oder mehrere auf einem Rahmen angeordnete Förderelemente enthält, welche die Bewegung der Transportbehälter in Förderrichtung bewirken können, und dass der genannte Rahmen mit den Förderelementen um die Kippachse schwenkbar angeordnet ist.

Die erfindungsgemäße Kippvorrichtung unterscheidet sich in mehrerlei Hinsicht vom bekannten Stand der Technik. Zum einen ist sie stationär aufgebaut, das heißt, dass sie keine (größeren) Teile enthält, welche sich während des Kippens mit dem Transportbehälter in Förderrichtung mitbewegen. Der Transportbehälter wird vielmehr während des Kippens an der Kippvorrichtung vorbeigeführt, wobei seine Bewegung in Förderrichtung durch die Förderelemente bewirkt wird. Das Kippen des Transportbehälters kann somit dynamisch erfolgen, das heißt ohne Unterbrechung der Bewegung in Förderrichtung. Falls erforderlich, kann die Bewegung des Transportbehälters jedoch auch zur Durchführung der Kippbewegung angehalten werden. Gekippt wird der Behälter dadurch, dass die ihn tragenden und vorwärts transportierenden Förderelemente, die auf einem Rahmen angeordnet sind, zusammen mit diesem Rahmen geschwenkt werden.

Die Anordnung der Förderelemente auf einem schwenkbaren Rahmen lässt sich gut durchführen, da diese Förderelemente einer vergleichbar geringen Kraftbelastung ausgesetzt sind. Sie müssen nämlich nur die Weiterbeförderung des Transportbehälters in Förderrichtung bewirken, das heißt die geringe, durch Reibung verlorengehende Energie ersetzen. Diese Förderelemente unterliegen daher geringeren dynamischen Anforderungen als die Antriebe, die ein Kippen des gesamten Behälters bewirken. Letztere müssen nämlich die hohen Kräfte aufbringen und diesen standhalten, die bei einem schnellen Bewegen und Heben des beladenen Transportbehälters auftreten. Bei der erfindungsgemäßen Kippvorrichtung können diese massiveren Kippelemente in vorteilhafter Weise ortsfest, das heißt unbeweglich, angebracht werden. Dies ist ein wesentlicher Unterschied zu dem erwähnten Stand der Technik, bei welchem die gesamten Kipparme beweglich auf einem umlaufenden Band angeordnet sind.

Ein weiterer Vorteil der erfindungsgemäßen Kippvorrichtung besteht darin, dass sie eine modulare Bauweise mit variabler Baulänge abhängig von der gewünschten Entladeleistung erlaubt. Selbst bei einem dynamischen Entladen der Transportbehälter ist es nämlich nicht erforderlich, dass der komplette Entladevorgang von einer einzigen Kippvorrichtung ausgeführt werden muss. Vielmehr kann der Transportbehälter während der Passage über mehrere aufeinanderfolgende Kippvorrichtungen entleert werden. Dabei wird er von Kippvorrichtung zu Kippvorrichtung weitergegeben und der Kippvorgang wird dabei sukzessive ausgeführt. Es ist demnach nicht erforderlich, dass die einzelne Kippvorrichtung eine Baulänge aufweist, die der während des dynamischen Entladevorganges zurückgelegten Strecke eines Transportbehälters entspricht. Dementsprechend können kurze Kippvorrichtungen gebaut werden, welche sich modulartig zu einer Entladestation gewünschter Länge aneinanderfügen lassen. Je mehr Kippvorrichtungen vorgesehen werden, desto höher wird tendenziell die Entladeleistung des Systems. Die erfindungsgemäße Kippvorrichtung erlaubt hierdurch einen sehr flexiblen Aufbau von Fördersystemen.

Die Förderelemente, welche die Bewegung der Transportbehälter in Förderrichtung bewirken, können nach Anspruch 2 einen Motor und hiermit gekoppelte Antriebsrollen enthalten. Der Transportbehälter wird bei diesem System somit (direkt oder indirekt) durch sich drehende Rollen befördert. Derartige Förderelemente lassen sich verhältnismäßig kompakt bauen und stellen damit eine geringe Belastung für den Schwenkrahmen dar.

Die Förderelemente für die Bewegung der Transportbehälter in Förderrichtung können nach Anspruch 2 auch ein umlaufendes und antreibbares Förderband enthalten. Dabei kann das Förderband insbesondere durch Antriebsrollen der zuvor beschriebenen Art angetrieben werden. Ein Förderband bietet eine gleichmäßigere Fahrbahn und Unterstützung für den Transportbehälter und erlaubt es, die Zahl der Rollen zu reduzieren.

Der Rahmen kann weiterhin zur Förderrichtung parallele Segmente enthalten, welche für eine Stabilisierung in dieser Richtung sorgen.

Der Rahmen, welcher die Förderelemente zur Bewegung der Transportbehälter in Förderrichtung trägt und welcher um die Kippachse schwenkbar gelagert ist, hat die verhältnismäßig hohen Kräfte beim Kippen des Transportbehälters aufzunehmen. Um ihm die notwendige Stabilität zu verleihen, kann er nach Anspruch 4 insbesondere als Viergelenkrahmen ausgebildet sein, welcher folgende Elemente enthält:
a) zwei parallele Quersegmente,
b) ein Koppelsegment, welches an seinen beiden Enden jeweils gelenkig mit je einem ersten Ende der Quersegmente verbunden ist, und
c) zwei ortsfeste Schwenkgelenke, von denen je eines an je einem zweiten Ende der Quersegmente angeordnet ist und deren Schwenkachse parallel zur Förderrichtung der Transportbehälter liegt.

Die Achse der Schwenkgelenke stellt gleichzeitig die Kippachse für den Transportbehälter dar. Die Ausgestaltung des Rahmens als Viergelenkrahmen mit zwei ortsfesten Schwenkgelenken sorgt für einen hohen Versteifungsgrad, der der Anordnung die notwendige Stabilität zur Aufnahme der auftretenden hohen Kräfte liefert. Insbesondere ist es möglich, zwei oder mehrere Viergelenkrahmen der oben beschriebenen Art über zur Förderrichtung parallele Segmente miteinander zu koppeln, so dass insgesamt ein in zwei Richtungen in sich stabiler Koppelrahmen geschaffen wird.

Bei einer Weiterentwicklung des genannten Schwenkrahmens können gemäß Anspruch 5 die Gelenke an den Enden des Koppelsegmentes, welche die Verbindung zu den Quersegmenten herstellen, untereinander gekoppelt sein. Das heißt, dass sich durch Zahnräder, eine Kette oder dergleichen eine Rotation des einen Gelenkes auf das jeweils andere Gelenk überträgt. Dies trägt zu einer weiteren Stabilisierung des Rahmens während der Kippbewegung bei.

Zur Ausführung der Kippbewegung ist nach Anspruch 6 mindestens eines der Rahmengelenke des oben beschriebenen Viergelenkrahmens mit einem Schwenkmotor verbunden, mit welchem der Gelenkwinkel verändert werden kann. Es ist ausreichend, die Stellung eines Gelenkes des Rahmens durch einen Antrieb zu kontrollieren, da hierdurch aufgrund der geometrischen Kopplung die Konfiguration des gesamten Rahmens festgelegt wird. Vorzugsweise wird der Schwenkmotor an einem der ortsfesten Schwenkgelenke an den zweiten Enden der Querstangen angeordnet, da in diesem Falle der Schwenkmotor selbst ortsfest gelagert werden kann und bei der Kippbewegung nicht mitbewegt werden muss.

Alternativ zum Antrieb über einen Schwenkmotor können auch verschiedene andere Antriebs- und Rahmenkonzepte in Zusammenhang mit der Erfindung verwendet werden. Beispielsweise kann gemäß Anspruch 7 ein Zahnsegmentantrieb oder gemäß Anspruch 8 ein Kolbenantrieb, vorzugsweise mittels eines Pneumatikkolbens (ggf. mit mehreren, hintereinander angeordneten Einzelkolben, um die unterschiedliche Kippwinkel anfahren zu können) vorgesehen sein. Auch ist beispielsweise ein Exzenterantrieb denkbar. Je nach Bauweise des Rahmens können diese alternativen Antriebe sowohl in Verbindung mit einem einfachen Rahmen (ggf. mit parallelen Segmenten) als auch in Verbindung mit dem vorstehend beschriebenen Viergelenkrahmen eingesetzt werden. Die im wesentlichen zur Transportrichtung parallele Schwenkachse muß nicht auf der Höhe der Transportebene liegen; diese kann abhängig von der gewünschten Entladetrajektorie beispielsweise auch deutlich unterhalb der Transportebene gelegt werden.

In einer Weiterentwicklung der Kippvorrichtung enthält diese eine Überkippsicherung, welche ein unbeabsichtigtes Abrutschen des Transportbehälters von der Kippvorrichtung während des Kippvorganges verhindert. Eine solche Einrichtung ist bei Systemen sinnvoll, bei denen mit dem Fördersystem verbundene Transportbehälter eingesetzt werden. Diese werden durch geeignete Maßnahmen, z.B. durch ein formschlüssiges Führungssystem, daran gehindert, beim Kippvorgang von der Kippvorrichtung abzuheben. Durch eine derartige Sicherung der Transportbehälter ist es auch möglich, hohe Transportgeschwindigkeiten mit ausreichender Sicherheit zu gewährleisten.

In weiterer Ausbildung der Erfindung kann die Schwenkbewegung alternativ sowohl - bezogen auf die horizontale Transportebene - nach oben als auch nach unten erfolgen. Die Kippvorrichtungen können - sofern die Geometrie der Transportbehälter dies erlaubt - auch so ausgebildet sein, daß diese sowohl eine Schwenkbewegung nach oben als nach unten, d.h. sowohl zur einen Seite als auch zur anderen Seite hin erlauben, so daß mit einer Entladestation Entladevorgänge zu zwei unterschiedlichen Transportzielen bzw. Transportsenken durchgeführt werden können. Dieses Ziel kann auch durch Anordnung zweier Kippstationen hintereinander verwirklicht werden, wobei die eine Kippstation zur einen, die andere zur gegenüberliegenden Seite hin entlädt, wobei auch Teile der beiden Stationen gemeinsam genutzt werden können (die für die Abkippbewegung der ersten Station zuständigen Segmente können gleichzeitig die Aufkippbewegung der zweiten Station in der anderen Kipprichtung ausführen).

Die Erfindung betrifft weiterhin eine Kippstation zum Entleeren von in Förderrichtung geförderten Transportbehältern, welche dadurch gekennzeichnet ist, dass sie mindestens eine Kippvorrichtung der oben genannten Art enthält. Wie bereits erläutert wurde, können die beschriebenen Kippvorrichtungen modulartig für einen dynamischen Entladevorgang von Transportbehältern eingesetzt werden. Dabei erfolgt im Bereich einer einzelnen Kippvorrichtung nicht der komplette Entladevorgang, sondern nur ein Teil desselben. Zu diesem Zweck wirken mehrere aufeinanderfolgende Kippvorrichtungen derart zusammen, dass sie insgesamt ein komplettes Kippen beziehungsweise Entleeren der Transportbehälter ausführen. Eine derartige Aneinanderreihung von Kippvorrichtungen bildet die erwähnte Kippstation, welche an quasi beliebiger Stelle innerhalb eines Fördersystems angeordnet werden kann und dort den kompletten Entladevorgang der Transportbehälter ausführt. Je nach Größe des Fördersystems und der Transportbehälter sowie der gewünschten Fördergeschwindigkeit können durch die modulartige Verwendung der Kippvorrichtungen sehr flexibel Kippstationen gewünschter Größe und Leistung aufgebaut werden.

Die Kippstationen können weiterhin durch ihre kompakte Geometrie in bestehende Rahmenkonstruktionen eines Gepäckfördersystems integriert werden, wodurch der konstruktive und fertigungstechnische Aufwand für das Gesamtsystem reduziert wird. Auch wird die Durchführung nachträglicher Modifikationen am Aufbau und der Dimensionierung der Gepäckförderanlage (z.B. hinsichtlich Kapazität und Lage der Entladestationen) erleichtert.

Eine Kippstation kann dabei in aufeinanderfolgende Sektionen unterteilt sein, wobei jede Sektion jeweils eine oder mehrere gleichartig angesteuerte Kippvorrichtungen der oben beschriebenen Art enthält. Das heißt, dass innerhalb einer Sektion eine einheitliche Kippbewegung durchgeführt wird, wodurch Kippantriebseinheiten gespart werden können. In benachbarten Sektionen kann dagegen die Durchführung der Kippbewegung variieren. So können beispielsweise die Sektionen nach verschiedenen Seiten kippen, oder die einzelnen Sektionen können aufeinanderfolgende Phasen der Kippbewegung ausführen.

Zur Durchführung der zuletzt genannten Variante enthält die Kippstation vorzugsweise eine Steuerungsvorrichtung, die derart ausgebildet ist, dass bei Übergang eines Transportbehälters von einer Sektion auf die nachfolgende Sektion die sich am Übergang befindlichen Kippvorrichtungen denselben Kippwinkel aufweisen, wobei jedoch die nachfolgende Kippbewegung dieser Kippvorrichtungen in entgegengesetzte Richtungen verläuft. Während der Übergabe eines Transportbehälters von einer ersten Sektion auf die nächste befinden sich daher die beiden Sektionen auf derselben Höhe beziehungsweise bei demselben Kippwinkel. Der Transportbehälter kann daher stufenlos auf die nächste Sektion übertreten. Nach Abschluss des Überganges kehrt dann jedoch die erste Sektion in ihre Ausgangsstellung zurück, um für die Aufnahme des nächsten Transportbehälters bereitzustehen. Die nachfolgende Sektion, in welcher sich der übergebene Transportbehälter befindet, setzt dagegen die in der ersten Sektion begonnene Kippbewegung fort.

Somit kann die Schwenkbewegung eines in die Kippstation einlaufenden Transportbehälters bereits begonnen werden, während die Schwenkbewegung eines oder mehrerer bereits im Bereich der Kippstation befindlicher Transportbehälter noch nicht abgeschlossen ist. Auf diese Weise können sehr hohe Kippraten erzielt werden. Besonders vorteilhaft weist der Schwenkwinkel über die Entladestrecke einen näherungsweise sinusförmigen verlauf auf, wie weiter unten näher beschrieben wird.

Zur Ausführung der genannten Steuerung enthält die Steuerungsvorrichtung vorzugsweise Sensoren, welche ihr Rückmeldungen über den jeweiligen Kippwinkel der Kippvorrichtungen sowie über die Position der Transportbehälter liefern. Mit Hilfe dieser Informationen kann die Steuerungsvorrichtung dann die Bewegungen der Kippvorrichtungen so aufeinander abstimmen, dass ein reibungsloser Transport und ein sicheres Entleeren der Transportbehälter gewährleistet ist.

Im folgenden wird die Erfindung mit Hilfe der Figuren beispielhaft erläutert. Es zeigen:
- Fig. 1: einen Querschnitt durch eine Kippvorrichtung;
- Fig. 2: eine Aufsicht auf den Fahrantrieb der Kippvorrichtung;
- Fig. 3: eine Seitenansicht und eine Aufsicht auf eine Kippstation;
- Fig. 4: schematisch den Ablauf eines Entladevorganges in einer Kippstation;
- Fig. 5: Zeitdiagramme der Kippwinkel der Kippvorrichtungen während eines Entladevorganges nach Fig. 4; und
- Fig. 6: Zeitdiagramme der Kippwinkel der Kippvorrichtungen während mehrerer Entladevorgänge bei sinusähnlichem Kippverlauf.

Das in den Figuren dargestellte System ist insbesondere auf die Integration in ein Fördersystem abgestimmt, bei welchem Stückgut in Transportbehältern 1 bewegt wird. Ein derartiges Fördersystem findet z.B. in Flughäfen zur Beförderung des Gepäcks Verwendung. Bei der Gepäckbeförderung in einem Flughafen werden die Transportbehälter mit hohen Geschwindigkeiten von typischerweise 2 bis 6 m/s transportiert. Die Entnahme von Gepäckstücken vom Förderband muss mit einem hohen Takt erfolgen, damit die gewünschten Förderleistungen eines solchen Systems gewährleistet werden können. Die Aussonderung der Gepäckstücke geschieht dabei über Kippvorrichtungen, welche den Transportbehälter seitlich zur Förderrichtung hin neigen, so dass sein Inhalt herausrutschen kann.

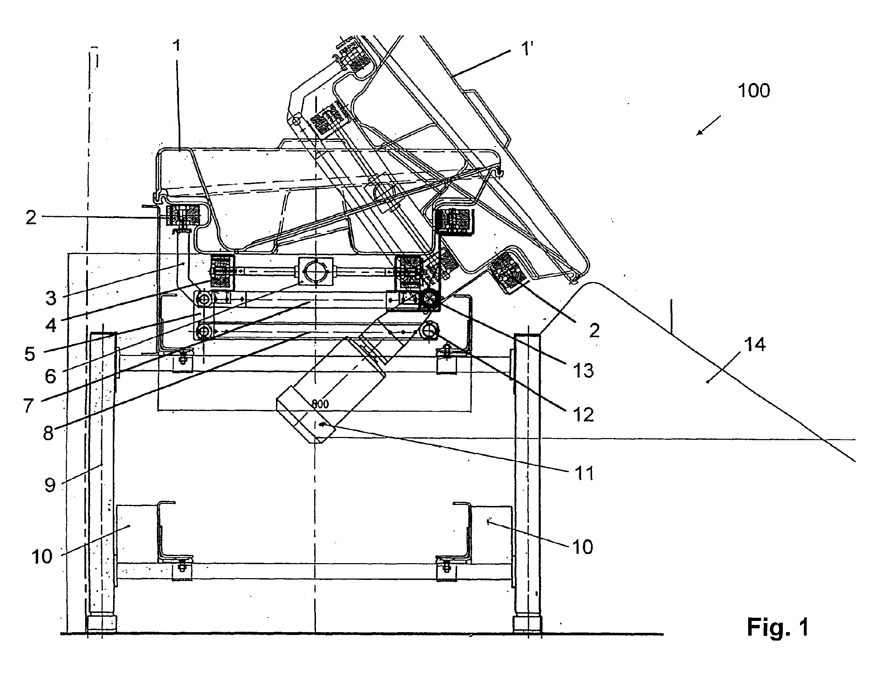

Eine solche erfindungsgemäße Kippvorrichtung ist in Figur 1 im Querschnitt gezeigt. Die Kippvorrichtung ist auf einem Gestellrahmen 9 montiert und kann variabel an quasi jedem beliebigen Punkt des Transportflusses innerhalb eines Fördersystems errichtet werden. Im unteren Bereich des Gestells 6 können sich Installationen und Kanäle für die Unterbringung von Steuerungs-, Schaltungs- und Energieversorgungseinrichtungen befinden. In Figur 1 ist ein Transportbehälter 1 dargestellt, welcher sich gerade auf der Kippvorrichtung befindet. Darüber hinaus ist der Transportbehälter 1' in derselben Figur in der gekippten Position dargestellt. In dieser Position kann ein in dem Transportbehälter befindliches Gepäckstück (nicht dargestellt) seitlich aus dem Behälter herausgleiten und in eine an der Seite mit entsprechendem Neigungswinkel angeordnete Rutsche 14 übertreten. Die Funktion der Kippvorrichtung besteht demnach darin, einen in Förderrichtung (das heißt senkrecht zur Zeichenebene in Figur 1) durchlaufenden Transportbehälter 1 seitlich zu kippen.

Diese Kippfunktion wird dadurch verwirklicht, dass die Kippvorrichtung einen schwenkbeweglichen Rahmen aufweist, welcher als Viergelenkkonstruktion aus den beiden Quersegmenten 7 und 8 sowie dem Koppelsegment 5 gebildet wird. Die Quersegmente sind parallel übereinander und quer zur Förderrichtung des Transportbehälters 1 angeordnet. An ihrem einen Ende (in der Zeichnung dem linken) sind sie gelenkig mit der Koppelstange 5 verbunden. An ihrem gegenüberliegenden Ende (in der Zeichnung rechts) sind sie jeweils in einem ortsfesten Gelenk 12 beziehungsweise 13 befestigt. Die Querstangen 7 und 8 können um diese Gelenke 12 beziehungsweise 13 jeweils geschwenkt werden, wobei sich der aus den Querstangen und der Koppelstange 5 gebildete Viergelenkrahmen parallelogrammartig verformt.

An der oberen ortsfesten Schwenkachse 13 des Viergelenkrahmens ist ein Schwenkmotor 11 angeordnet, welcher eine Drehung der Querstange 7 um einen einstellbaren Winkel bewirken kann. Bei dem Schwenkmotor handelt es sich vorzugsweise um einen Drehstrommotor, der über ein Stirnradgetriebe oder ein Schneckengetriebe die Schwenk der Querstange 7 antreibt. Bei einer Bewegung der Querstange 7 bewegen sich die übrigen Segmente 5 und 8 des Viergelenkrahmens aufgrund ihrer Kopplungen zwangsläufig mit. Durch diese Koppelgelenkkonstruktion gewährleistet der Rahmen eine hohe Stabilität. Diese wird weiter dadurch erhöht, dass die jeweils übereinander liegenden Gelenke (die ortsfesten Gelenke 12 und 13 sowie die an der Koppelstange 5 befindlichen Gelenke) über Koppeleinrichtungen wie z.B. eine Kette oder Zahnräder miteinander verbunden sind. Eine derartige stabile Auslegung des Rahmens ist angesichts der hohen dynamischen Belastungen beim Betrieb der Vorrichtung erforderlich, da Behälter mit einem reinen Eigengewicht (also ohne Beladung) von bis zu 40 kg mit hoher Geschwindigkeit bewegt werden müssen.

Die bisher beschriebene Anordnung des Viergelenkrahmens erlaubt ein seitliches Kippen eines vom Rahmen mittelbar oder unmittelbar getragenen Transportbehälters 1. Bei der dargestellten Anordnung wird dabei der Transportbehälter 1 nach oben gekippt, das heißt auf einer Seite angehoben. Ebenso wäre es auch möglich, den Behälter zum Entleeren nach unten zu kippen (das heißt auf der beweglichen Seite abzusenken) oder nach Art einer Wippe eine Mischung dieser beiden Bewegungsformen auszuführen, das heißt den Behälter auf einer Seite anzuheben und auf der gegenüberliegenden Seite abzusenken. Diese Bewegungsformen können durch eine entsprechende Positionierung der Kippachse und des Freiraumes für die Kippbewegung verwirklicht werden.

Der kippbare Viergelenkrahmen wird erfindungsgemäß mit Förderelementen versehen, welche eine Weiterbewegung des Transportbehälters 1 in Förderrichtung erlauben. Dies ermöglicht einen sogenannten dynamischen Kippvorgang, bei dem sich der Transportbehälter 1 während des seitlichen Kippens gleichzeitig in Förderrichtung weiterbewegt. Es liegt auf der Hand, dass sich hierdurch hohe Kippleistungen gewährleisten lassen, da der Transportfluss für das Entladen nicht unterbrochen werden muss.

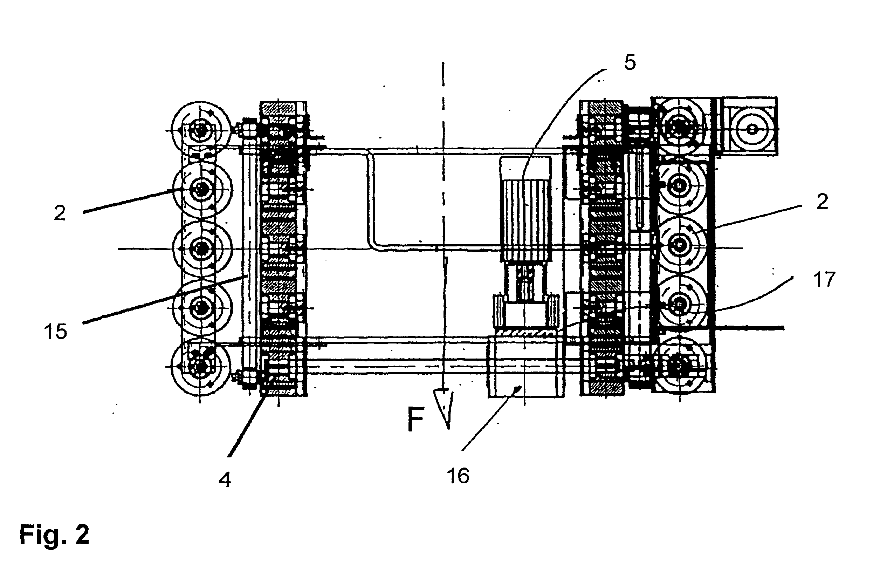

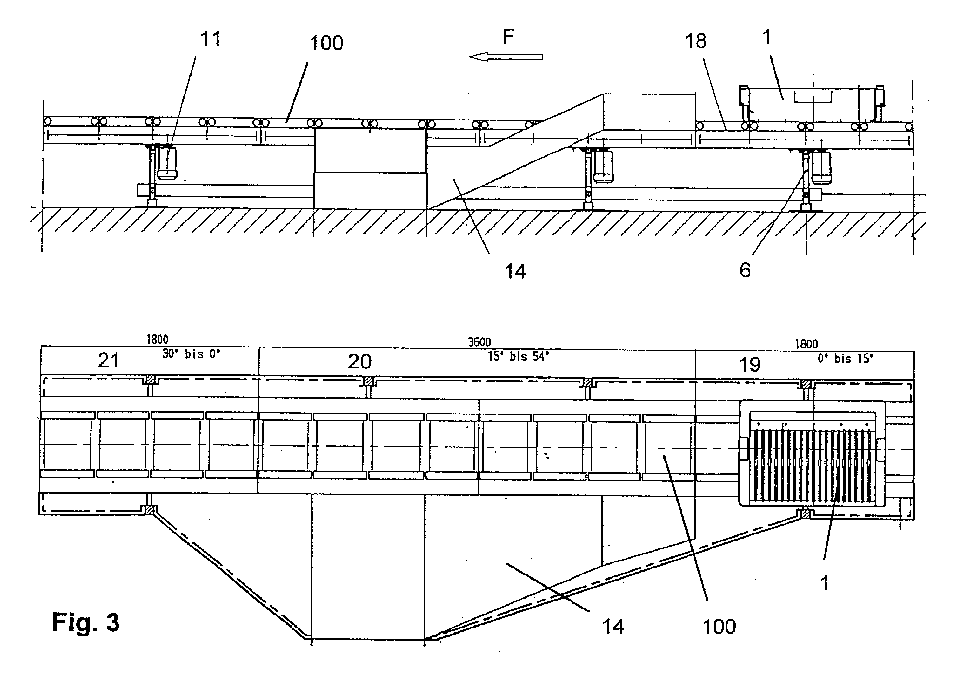

Der Antrieb des Transportbehälters 1 in Förderrichtung geschieht dabei über Rollen 4, die von einem Drehstrommotor 5 mit Kegelradgetriebe 16 (Figur 2) angetrieben werden. Im einzelnen sieht die Konstruktion so aus, dass auf dem Viergelenkrahmen auf der Seite liegende U-förmige Traversen angeordnet sind. Diese U-förmige Anordnung erlaubt auf dem dem Transportbehälter 1 zugewandten Schenkel des U die Auflage eines Riemens 18 (Figur 3). Dieser Riemen wird von den Rollen 4 angetrieben beziehungsweise geführt und umgelenkt. Der Antrieb erfolgt dabei, wie bereits beschrieben, durch den Getriebemotor 5, welcher eine quer zur Förderrichtung ausgerichtete Welle antreibt, an deren Enden je eine Antriebsrolle 4 sitzt.

Eine Aufsicht auf diesen Fahrantrieb ist in Figur 2 dargestellt. Dabei sind die mehreren hintereinander angeordneten Spurrollen 4 sowie der antreibende Motor 5 mit dem Getriebe 16 und der Antriebswelle erkennbar. Die hinteren, nicht angetriebenen Umlenkrollen sind einzeln gelagert, um den Fahrantriebsriemen spannen beziehungsweise leicht spuren zu können. Aufgrund der verhältnismäßig kurzen Baulänge der Kippvorrichtung von ca. 500 mm kann eine ausreichende Drehmomentabgabe von den Antriebsrollen 4 auf den umlaufenden Riemen durch eine entsprechende maßvolle Vorspannung gewährleistet werden. Mit einem solchen Fahrantrieb können Fördergeschwindigkeiten von typischerweise 1 bis 1,5 m/s erzielt werden.

Eine Abwandlung der Ausführungsform nach Figur 1 könnte darin bestehen, dass zumindest einer der Antriebsriemen 18 (an der nicht verschwenkten Seite unter dem Behälter 1) durchgehend vom übrigen Fördersystem ausgebildet wird.

In Figur 2 sind weiterhin Koppelstangen 15 erkennbar, welche parallel zur Förderrichtung F verlaufen und jeweils zwei Viergelenkrahmen 5, 7, 8 (Figur 1) miteinander verbinden. Durch diese Kopplung wird eine Stabilität des Kipprahmens auch in Fahrtrichtung gewährleistet. Somit wird insgesamt ein in zwei Richtungen in sich stabiler Koppelrahmen geschaffen.

Weiterhin ist in Figur 2 eine Drehmomentenstütze 17 zur Stabilisierung des Motors 5 dargestellt. Darüber hinaus sind Führungsrollen 2 erkennbar, welche parallel zur Förderrichtung F zu beiden Seiten der Förderstrecke aufgereiht sind. Die Funktion dieser Führungsrollen 2 wird aus Figur 1 besser ersichtlich. Hier wird erkennbar, dass die Führungsrollen den Transportbehälter 1 in seitlicher Richtung führen. Die Rollen 2 sind mit dem schwenkbaren Viergelenkrahmen verbunden, da sie bei der Kippbewegung in Kontakt zu dem Transportbehälter 1 bleiben müssen. Die am Ende eines Auslegers 3 auf der anzuhebenden Seite des Transportbehälters 1 angeordneten Führungsrollen 2 greifen dabei in eine breite Rinne in der Seitenwand des Behälters 1 ein. Hierdurch wird der Behälter formschlüssig gegen ein Abheben von seiner Unterlage beim Kippen gesichert. Diese Überkippsicherung sorgt ferner dafür, dass auf den Behälter während des Kippens keine hohen Kräfte wirken und diesen zusätzlich belasten. Der Transportbehälter 1 verbleibt somit im Fördersystem. Dies ist nicht zuletzt deshalb wichtig, weil jeder Transportbehälter mit einem Codesystem ausgestattet ist, um die in ihm enthaltenen Gepäckstücke eindeutig zu identifizieren und leiten zu können.

Die mit Hilfe der Figuren 1 und 2 beschriebene Kippvorrichtung 100 kann in der Regel nur dann einen kompletten Entladevorgang eines Transportbehälters 1 ausführen, wenn dieser statisch erfolgt, das heißt wenn der Transportbehälter 1 während des Kippens nicht in Förderrichtung bewegt wird. Mit einem solchen statischen Verfahren lassen sich jedoch nicht die von modernen Gepäckbeförderungssystemen für z.B. Flughäfen geforderten hohen Leistungen erzielen.

Daher werden eine Mehrzahl von Kippvorrichtungen 100 der oben beschriebenen Art modulartig zu Kippstationen zusammengesetzt, von denen in Figur 3 eine in der Seitenansicht (oberer Teil der Figur) und in der Aufsicht (unterer Teil) dargestellt ist. Die Entladestation fügt sich flexibel in die übrige Transportstrecke für die Transportbehälter 1 ein. Das heißt, dass mit Hilfe der erfindungsgemäßen Kippvorrichtungen 100 je nach Bedarf Entladestationen in die Förderstrecke eingebaut werden können.

Die in Figur 3 dargestellte Entladestation ist aus insgesamt 16 Kippvorrichtungen 100 zusammengesetzt, wobei sich jeweils vier dieser Kippvorrichtungen 100 in einem gemeinsamen Gestell 6 befinden können. Weiterhin findet eine funktionale Gruppierung der Kippvorrichtungen 100 in drei aufeinanderfolgende Sektionen mit vier bzw. acht Kippvorrichtungen statt, wobei die Kippvorrichtungen innerhalb einer Sektion gleichartige Bewegungen ausführen. In der ersten Sektion 19 bewegen sich vier Kippvorrichtungen dabei um einen Schwenkwinkel zwischen 0° und 15°. In der nachfolgenden Sektion 20 mit acht Kippvorrichtungen beträgt der Schwenkwinkel 15° bis 54°, das heißt hier wird der maximale Kippwinkel erreicht und das Entladen eines Transportbehälters 1 in die Rutsche 14 ermöglicht. In der letzten Sektion 21 können sich die Kippelemente um einen Winkel zwischen 30° und 0° bewegen. Die Kippbewegung der Sektionen untereinander ist so auf die Bewegung des durchgeleiteten Transportbehälters 1 abgestimmt, dass die sich gerade unter dem Behälter befindlichen Kippvorrichtungen 100 alle denselben Schwenkwinkel aufweisen. Es darf nämlich nicht zu einem Verkanten des Transportbehälters 1 in Förderrichtung F kommen. Ein Transportbehälter 1 mit Übergröße überstreicht dabei einen Bereich von etwa drei Kippvorrichtungen 100.

Mit der in Figur 3 dargestellten Entladestation sind bei einer dynamischen Entladung hohe Zyklusleistungen möglich. So können typischerweise bis zu 1500 Kippungen pro Stunde in einer erreicht werden. Die in Figur 3 dargestellte Entladestation ist mit Steuereinrichtungen und einer Sensorik ausgestattet, welche die Durchführung eines Entladeverfahrens gemäß der nachfolgenden Beschreibung erlauben.

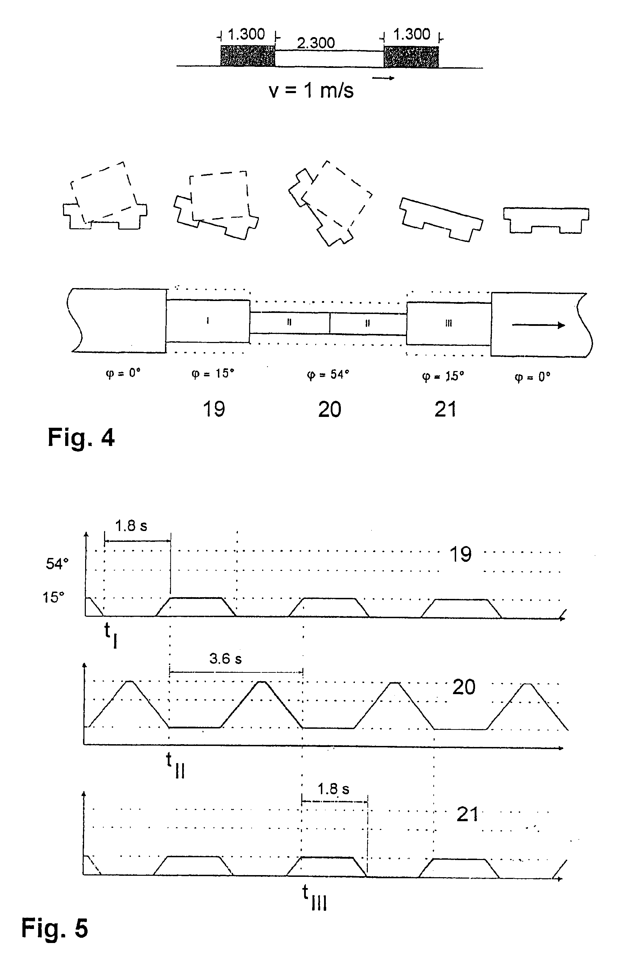

In den Figuren 4 und 5 ist beispielhaft die Steuerung der Entladestation bei einer angestrebten Rate von 1000 Entladungen pro Stunde dargestellt. Die Zykluszeit für eine einzelne Entladung beträgt somit 3,6 s. Die Entladung erfolgt dynamisch während der Durchfahrt der Transportbehälter 1 durch die Entladestation mit einer Geschwindigkeit von 1 m/s. Die Transportbehälter werden für die Durchfahrt auf einen Abstand von 2,3 s (entsprechend 2,3 m) gebracht (vgl. oberstes Diagramm in Figur 4).

Im unteren Teil von Figur 4 sind die Sektionen 19, 20 und 21 der Entladestation sowie die daran anschließenden Abschnitte der normalen Förderstrecke schematisch dargestellt. Über den entsprechenden Abschnitten ist jeweils die Kippneigung eines darin befindlichen Transportbehälters 1 mit einem Gepäckstück angedeutet.

In Figur 5 sind die zugehörigen Winkelverläufe über der Zeit t in den drei Sektoren 19, 20 und 21 dargestellt. Hieraus ergibt sich folgender Ablauf:

Zum Zeitpunkt t_{I} tritt ein Transportbehälter 1 von der normalen Förderstrecke in den Sektor 19 über. Die Kippvorrichtungen des Sektors 19 bleiben dabei so lange bei dem Kippwinkel ϕ = 0°, bis der Transportbehälter 1 (nach 1,3 s) sich komplett im Sektor 19 befindet. Anschließend erfolgt ein Kippen des kompletten Sektors 19 bis zu einem Winkel von 15° (Zeitpunkt t_{II}). Bei Erreichen der 15°-Stellung zum Zeitpunkt t_{II} befindet sich der Transportbehälter 1 gerade am Ende des Sektors 19. Dort trifft er auf die Kippvorrichtungen des anschließenden Sektors 20, welche sich für einen glatten Übergang zu diesem Zeitpunkt ebenfalls auf einem Kippwinkel von 15° befinden müssen (vgl. mittleres Diagramm in Figur 5). Auf diesem Winkel von 15° verharren die Sektoren 19 und 20, bis der Übergang des Transportbehälters 1 vom Sektor 19 auf den Sektor 20 nach 1,3 s abgeschlossen ist.

Sobald sich der Transportbehälter 1 komplett im Sektor 20 befindet, kann dieser Sektor mit der Fortsetzung der Kippbewegung von 15° auf 54° beginnen. Gleichzeitig schwenkt der erste Sektor 19 zurück in die 0°-Stellung. Nachdem er diese erreicht hat, kann der nächste Transportbehälter 1 von der normalen Förderstrecke in den Sektor 19 übertreten. Die Zykluszeit, die der Sektor 19 für das Aufnehmen eines Transportbehälters, Anheben auf 15°, Übergeben und Zurückkehren in die Ausgangsstellung benötigt, beträgt somit den gewünschten Wert von 3,6 s.

Der im Sektor 20 befindliche Transportbehälter wird für einen kurzen Zeitraum auf dem maximalen Kippwinkel von 54° gehalten, damit er sich vollständig zur Rutsche hin entleeren kann. Anschließend fährt die Sektion 20 auf 15° zurück. Sie trifft dabei zum Zeitpunkt t_{III} an ihrem Ausgang auf die ebenfalls auf einem Winkel von 15° stehende Sektion 21, an welche nachfolgend der entleerte Transportbehälter übergeben wird. Zu diesem Zweck müssen die Sektionen 20 und 21 für 1,3 s bei dem Winkel von 15° verharren. Während dieser Zeit wird gleichzeitig auf der Eingangsseite der Sektion 20 der nächste, noch befüllte Transportbehälter in die Sektion 20 übernommen.

Nach der vollständigen Übergabe des entleerten Transportbehälters 1 an die Sektion 21 schwenkt diese von 15° auf 0° zurück und übergibt den entleerten Transportbehälter anschließend an die normale Förderstrecke.

Soll ein in der Entladestation befindlicher Behälter nicht gekippt werden, etwa weil er fehlgeleitet wurde oder die Kippsenke 14 nicht frei ist, werden die Kippvorrichtungen 100 schnell in ihre Ausgangsposition abgesenkt, so dass ohne Zeitverzögerung ein Durchfahren des Behälters durch die Entladestation möglich ist. Der Übergang in die Durchfahrstellung wird vom System einer übergeordneten Steuerung mitgeteilt, damit der entsprechende Behälter in einem Kreis nochmals zugeführt werden kann. Die einzelnen Kippvorrichtungen haben Einzelsteuerungen, die ihre jeweilige Kippposition erkennen und bewerten, so dass Störungen an die übergeordnete Steuerung gemeldet werden können. Die Steuerung der gesamten Entladestation wird vorzugsweise mit Hilfe verschiedener Sensoren wie z.B. Lichtschranken für die Erfassung von Transportbehältern sowie mit Hilfe einer SPS durchgeführt. Eine Lichtschranke am Ende der Gepäckschütte kann z.B. überwachen, ob ein Gepäckstück aus einem zu entladenden Behälter ordnungsgemäß herausgerutscht ist oder nicht. Weitere Funktionen dieses Systems sind Entladen, Fahren, Senke frei, Start-Stop und Not-Aus. Die Getriebe und Motoren der Anlage sind selbsthemmend ausgestaltet, damit sie bei einem Ausfall der Energieversorgung in ihrer momentanen Position verharren.

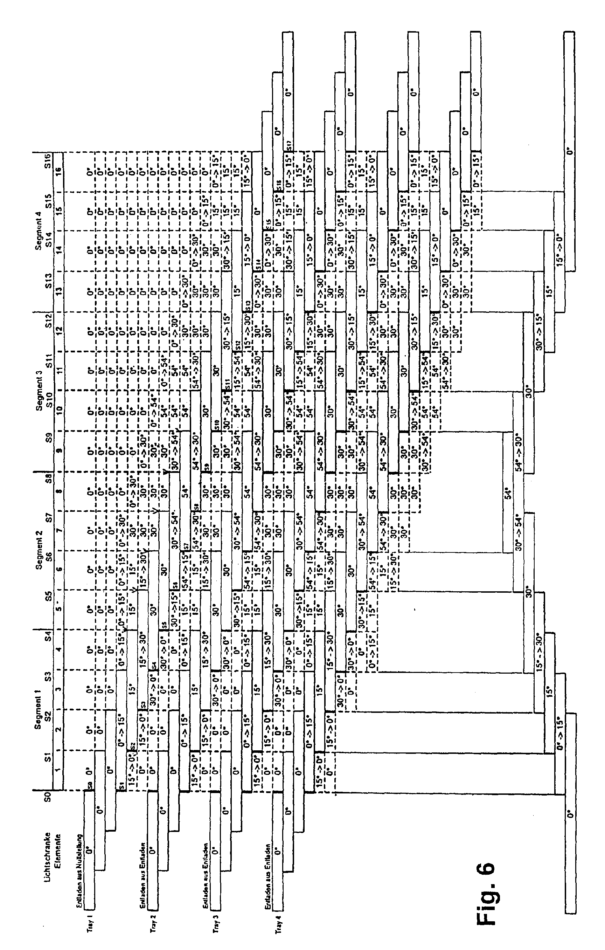

Mit einer längeren Ausgestaltung der Entladestation ist es möglich, die einzelnen Winkelabstufungen für den Kippvorgang noch feiner zu wählen. Hiermit lassen sich die in Figur 5 dargestellten sägezahnartigen Verläufe glätten, so dass sie sinusähnlich werden. Ein Zeitschema eines entsprechenden Entladevorganges ist beispielhaft in Figur 6 dargestellt. Dem Zeitdiagramm liegt eine Entladestrecke mit vier Segmenten mit jeweils vier Kippvorrichtungen zugrunde, wobei der Kippwinkel jeder der insgesamt sechzehn Kippvorrichtungen (Kennzeichnung 1 bis 16, zugehörige Lichtschranken SO bis S16) einzeln veränderbar ist. Im oberen Teil der Figur ist der zeitliche Ablauf der Bewegungen für insgesamt vier einlaufende Behälter (Kennzeichnung Tray 1 bis Tray 4) dargestellt; die Zeitachse läuft von oben nach unten. Der Durchlauf der Behälter ist durch Rechtecke gekennzeichnet, deren Breite der Behälterlänge (ca. 1,5 m) entspricht. Das Bewegungsschema für den ersten Behälter (Tray 1) unterscheidet sich von dem der übrigen Behälter, da sich die Kippvorrichtungen für diesen Behälter noch in der Nullstellung befinden (Kennzeichnung "Entladen aus Nullstellung"), während bei den übrigen Behältern ein dynamisches Entladen ausgehend von den Kippstellungen des letzten Entladevorganges stattfindet (Kennzeichnung "Entladen aus Entladen"). Wie ersichtlich, kann das nächste Behältnis bereits in die Entladestrecke einfahren, während das aktuelle Behältnis noch gekippt wird, wodurch eine erhöhte Zyklusleistung gewährleistet wird. Die Einstellung der Kippelemente erfolgt jeweils auf die Winkelstufen von 0°, 15°, 30° und 54°. Wenn sich ein Behältnis auf der Kippvorrichtung befindet, so wird der Kippwinkel aufgrund dynamischer Begrenzungen jeweils nur von einer Winkelstufe auf die benachbarte Winkelstufe verändert. Ohne Behältnis sind - wie ersichtlich - auch schnellere Winkelveränderungen möglich (z.B. von 54° auf 15°). Durch die Möglichkeit dieser schnellen Winkelveränderungen ist gewährleistet, daß auch ein Durchfahren von Behältern (d.h. alle Kippvorrichtungen in 0°-Stellung) ohne Entladeleistungseinbußen möglich ist. Im unteren Teil der Fig. 6 ist der Kippablauf für ein Behältnis (Darstellung Kippwinkel über die Entladestrecke) nochmals veranschaulicht. Wie ersichtlich, entspricht der Kippwinkelverlauf näherungsweise einer Sinusform. Berücksichtigt man, daß die Kippwinkelveränderungen kontinuierlich ablaufen, so ergibt sich ein kontinuierlicher sinusförmiger Verlauf.

## Patentansprüche

1. Kippvorrichtung (100) zum Schwenken von Transportbehältern (1, 1') um eine zur Förderrichtung (F) der Transportbehälter im wesentlichen parallele Kippachse,
dadurch gekennzeichnet,
dass diese ein oder mehrere auf einem Rahmen (5, 7, 8) angeordnete Förderelemente (4, 6) enthält, welche die Bewegung der Transportbehälter in Förderrichtung bewirken können,
und dass der Rahmen mit den Förderelementen um die Kippachse schwenkbar angeordnet ist.

2. Kippvorrichtung nach Anspruch 1,
dadurch gekennzeichnet, dass die Förderelemente einen Motor (6) und hiermit gekoppelte Antriebsrollen (4) und/oder ein umlaufendes und antreibbares Förderband (18) enthalten.

3. Kippvorrichtung nach Anspruch 1 oder 2,
dadurch gekennzeichnet, dass der Rahmen zur Förderrichtung (F) parallele Segmente (15) enthält.

4. Kippvorrichtung nach einem der Ansprüche 1 bis 3,
dadurch gekennzeichnet, dass der Rahmen ein Viergelenkrahmen ist mit
a) zwei parallelen Quersegmenten (7, 8),
b) einem Koppelsegment (5), welches an seinen Enden jeweils gelenkig je einem ersten Ende der Quersegmente verbunden ist,
c) zwei ortsfesten Schwenkgelenken (12, 13), von denen je eines an den zweiten Enden der Quersegmente angeordnet ist und deren Schwenkachse parallel zur Förderrichtung (F) liegt.

5. Kippvorrichtung nach Anspruch 4,
dadurch gekennzeichnet, dass die Gelenke des Viergelenkrahmens untereinander drehgekoppelt sind.

6. Kippvorrichtung nach Anspruch 4 oder 5,
dadurch gekennzeichnet, dass mindestens eines (13) der Gelenke des Rahmens mit einem Schwenkmotor (11) verbunden ist, mit welchem der Gelenkwinkel verändert werden kann.

7. Kippvorrichtung nach einem der Ansprüche 1 bis 5, dadurch gekennzeichnet, daß der Rahmen mit einem Zahnsegment verbunden ist, in das ein von einem Antriebsmotor angetriebenes, ortsfest angeordnetes Zahnrad zur Ausführung der Schwenkbewegung eingreift.

8. Kippvorrichtung nach einem der Ansprüche 1 bis 5, dadurch gekennzeichnet, daß der schwenkbare Rahmen zur Ausführung der Schwenkbewegung mit einem Ende eines Antriebszylinders verbunden ist, dessen anderes Ende ortsfest mit der Kippvorrichtung verbunden ist.

9. Kippvorrichtung nach einem der Ansprüche 1 bis 8, dadurch gekennzeichnet, dass diese eine Überkippsicherung (2) für die Transportbehälter (1) enthält.

10. Kippvorrichtung nach einem der Ansprüche 1 bis 9, dadurch gekennzeichnet, daß der Rahmen zur Ausführung des Entladevorganges nach oben und/oder nach unten - bezogen auf die horizontale Ausgangsposition - schwenkbar ausgebildet ist.

11. Kippstation zum Entleeren von in Förderrichtung (F) geförderten Transportbehältern (1),
dadurch gekennzeichnet, dass sie mindestens eine Kippvorrichtung (100) nach einem der Ansprüche 1 bis 10 enthält.

12. Kippstation nach Anspruch 11,
dadurch gekennzeichnet, dass sie in aufeinander folgende Sektionen (19, 20, 21) unterteilt ist, welche jeweils eine oder mehrere gleichartig angesteuerte Kippvorrichtungen (100) nach einem der Ansprüche 1 bis 10 enthalten.

13. Kippstation nach Anspruch 12,
dadurch gekennzeichnet, dass sie eine Steuerungsvorrichtung enthält, die derart ausgebildet ist, dass während des Übergangs eines Transportbehälters (1) von einer Sektion (19) auf die nachfolgende Sektion (20) die beiden Sektionen denselben Kippwinkel aufweisen, und dass die nachfolgende Schwenkbewegung der Sektionen in entgegengesetzte Richtungen verläuft.

14. Kippstation nach Anspruch 13, dadurch gekennzeichnet, daß die Steuerungsvorrichtung derart zur Ansteuerung der einzelnen Sektionen (19, 20, 21) beim Entladevorgang ausgebildet ist, daß die Schwenkbewegung eines in die Kippstation einlaufenden Transportbehälters bereits begonnen werden kann, während die Schwenkbewegung eines oder mehrerer bereits im Bereich der Kippstation befindlicher Transportbehälter noch nicht abgeschlossen ist.

15. Kippstation nach Anspruch 14, dadurch gekennzeichnet, daß die Steuerungsvorrichtung derart zur Ansteuerung der einzelnen Sektionen (19, 20, 21) beim Entladevorgang ausgebildet ist, daß der Schwenkwinkel, den ein Transportbehälter (1) über die Entladestrecke erfährt, einen näherungsweise sinusförmigen Verlauf aufweist.
